(19) Europäisches Patentamt
European Patent Office
Office européen des brevets

(11) **EP 4 675 311 A1**

(12) **EUROPEAN PATENT APPLICATION**

(43) Date of publication:
**07.01.2026 Bulletin 2026/02**

(51) International Patent Classification (IPC):
**G01S 13/60** (2006.01) **G01S 13/933** (2020.01)

(21) Application number: **24186564.1**

(22) Date of filing: **04.07.2024**

(52) Cooperative Patent Classification (CPC):
**G01S 13/60; G01S 13/933**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Elektrobit Automotive GmbH**
**91058 Erlangen (DE)**

(72) Inventors:
• **Zimmerer, Alexander**
**91058 Erlangen (DE)**
• **Zibaei, Ehsan**
**91058 Erlangen (DE)**
• **Nourbakhsh, Seyed Hami**
**91058 Erlangen (DE)**

(74) Representative: **Aumovio Corporation**
**AUMOVIO Germany GmbH**
**Taunusstraße 36**
**80807 München (DE)**

(54) **EVALUATION OF MEASUREMENT DATA FROM A RADAR SENSOR OF AN AERIAL VEHICLE**

(57) The present invention is related to a method, a computer program code, and an apparatus for evaluating measurement data from a radar sensor of an aerial vehicle. In a first step, measurement data from the radar sensor are retrieved (S1). A radial velocity of a detected stationary object relative to the radar sensor is determined (S2) from the measurement data. An angular velocity of the radar sensor is then determined (S3) from the determined radial velocity, an estimated radial velocity of the detected object relative to the radar sensor, which is estimated from a model, and a distance to the detected object. The determined angular velocity of the radar sensor and a determined translational velocity of the radar sensor may be used (S4) for positioning of the aerial vehicle. The invention is further related to an aerial vehicle, which uses such method or apparatus.

FIG. 1

**Description**

The present invention is related to a method, a computer program code, and an apparatus for evaluating measurement data from a radar sensor of an aerial vehicle. The invention is further related to an aerial vehicle, which uses such method or apparatus.

State of the art doppler-based velocity estimation is driven by automotive applications. In those applications, there usually is no significant rotational motion of the sensor. However, when such sensors are used in aerial applications such as e.g., unmanned aerial vehicles (UAV), rotational motion is much more common. Due to this rotational motion, the commonly known doppler velocity motion equation is erroneous. Simply speaking, fast turns lead to an additional measured tangential velocity for detected objects and obstacles.

It is an object of the present invention to provide an improved solution for evaluating measurement data from a radar sensor of an aerial vehicle.

This object is achieved by a method according to claim 1, by a computer program code according to claim 13, by an apparatus according to claim 14, and by an aerial vehicle according to claim 15. The dependent claims include advantageous further developments and improvements of the present principles as described below.

According to a first aspect, a method for evaluating measurement data from a radar sensor of an aerial vehicle comprises:

- retrieving measurement data from the radar sensor;
- determining a radial velocity of a detected stationary object relative to the radar sensor from the measurement data;
- determining an angular velocity of the radar sensor from the determined radial velocity, an estimated radial velocity of the detected object relative to the radar sensor, which is estimated from a model, and a distance to the detected object.

Accordingly, a computer program code comprises instructions, which, when executed by at least one computer, cause the at least one computer to perform the following steps for evaluating measurement data from a radar sensor of an aerial vehicle:

- retrieving measurement data from the radar sensor;
- determining a radial velocity of a detected stationary object relative to the radar sensor from the measurement data;
- determining an angular velocity of the radar sensor from the determined radial velocity, an estimated radial velocity of the detected object relative to the radar sensor, which is estimated from a model, and a distance to the detected object.

The term computer has to be understood broadly. In particular, it also includes embedded devices and other processor-based data processing devices. In addition, the computer does not necessarily perform the various steps itself. It is likewise possible that the computer instructs other components to perform some or all of the steps.

The computer program code can, for example, be made available for electronic retrieval or stored on a computer-readable storage medium.

According to another aspect, an apparatus for evaluating measurement data from a radar sensor of an aerial vehicle comprises:

- a data retrieval unit configured to retrieve measurement data from the radar sensor; and
- a processing unit configured to determine a radial velocity of a detected stationary object relative to the radar sensor from the measurement data, and to determine an angular velocity of the radar sensor from the determined radial velocity, an estimated radial velocity of the detected object relative to the radar sensor, which is estimated from a model, and a distance to the detected object.

The invention aims to determine the movement of the radar sensor by evaluating measurement data from the radar sensor. Basis for this evaluation is that the radar sensor receives reflections from a static environment, i.e., an environment that does not move. Nevertheless, the radar sensor measures a radial velocity for each object that reflects radar beams. This radial velocity is caused by the radar sensor's own movement. In case the radar sensor performs a rotational movement, the radial velocity measured by the radar sensor is distorted. According to the invention, the evaluation of the measurement data attempts to correct this error by virtually transferring the rotational movement to the detected objects and calculating how this movement distorts the radial velocity.

In an advantageous embodiment, determining the angular velocity of the radar sensor comprises determining a lateral velocity of the detected object relative to the radar sensor. The relative lateral velocity and the distance to the detected object can be used to determine the angular velocity of the radar sensor.

In an advantageous embodiment, determining the angular velocity of the radar sensor further comprises calculating a difference between the estimated radial velocity of the detected object and the determined radial velocity of the detected object. The lateral velocity of the detected object is directly proportional to this difference.

In an advantageous embodiment, an angular velocity of the detected object is estimated using an estimated initial value of a translational velocity of the radar sensor. For example, the initial value of the translational velocity of the radar sensor may be estimated from data of at least one sensor, e.g., an inertial measurement unit or an image-based odometer. Of course, also other types of sensors can be used. Later, the angular velocity of the detected object is estimated using a translational velocity of the radar sensor that stems from the model.

In an advantageous embodiment, a translational velocity of the radar sensor is determined from an estimated angular velocity of the radar sensor and the determined radial velocity of the detected object. For this purpose, a measurement equation that takes into account azimuth and elevation of the detected object relative to the radar sensor may be used.

In an advantageous embodiment, the determined angular velocity of the radar sensor and the determined translational velocity of the radar sensor are used by a position estimator to enhance positioning of the aerial vehicle. For example, the position estimator may be a Kalman filter, preferably an extended Kalman filter, or another suitable extended filter. With the determined values of the angular velocity and the translational velocity of the radar sensor, the position estimator can estimate the position of the aerial vehicle with a high accuracy.

In an advantageous embodiment, the determined angular velocity of the radar sensor and the determined translational velocity of the radar sensor are used in a recursive manner for refining the determined angular velocity of the radar sensor and the determined translational velocity of the radar sensor. Once determined values of the angular velocity and the translational velocity of the radar sensor are available, these values can be used to refine the evaluation and to obtain an optimal solution for underlying equations.

In an advantageous embodiment, the radial velocity is determined for a plurality of detection points. The radar cross section of an object will generally lead to a plurality of detection points in the measurement data. The described evaluation of the measurement data is preferably performed for each of the detection points, which further improves the reliability of the results.

In an advantageous embodiment, non-stationary objects are filtered from the measurement data. The described solution assumes a stationary environment. To achieving a high accuracy, non-stationary objects are preferably removed from the measurement data. This can be done, for example, using RANSAC (Random Sample Consensus) or similar approaches.

Advantageously, an aerial vehicle comprises an apparatus according to the invention for evaluating measurement data from a radar sensor of the aerial vehicle. For example, the aerial vehicle may be a drone. In general, the described solution evaluates movements of the radar sensor. By assuming a rigid body, the movement of the aerial vehicle can be determined by coordinate transformation.

Further features of the present invention will become apparent from the following description and the appended claims in conjunction with the figures.

Figures

Fig. 1    schematically illustrates a method for evaluating measurement data from a radar sensor of an aerial vehicle;

Fig. 2    schematically illustrates a first embodiment of an apparatus for evaluating measurement data from a radar sensor of an aerial vehicle;

Fig. 3    schematically illustrates a second embodiment of an apparatus for evaluating measurement data from a radar sensor of an aerial vehicle;

Fig. 4    shows a simplified model of a fast turn of an aerial vehicle;

Fig. 5    shows a simplified signal processing pipeline; and

Fig. 6    shows a difference between an expected radial velocity and a measured radial velocity of a detected object.

Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random access memory (RAM), and nonvolatile storage.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

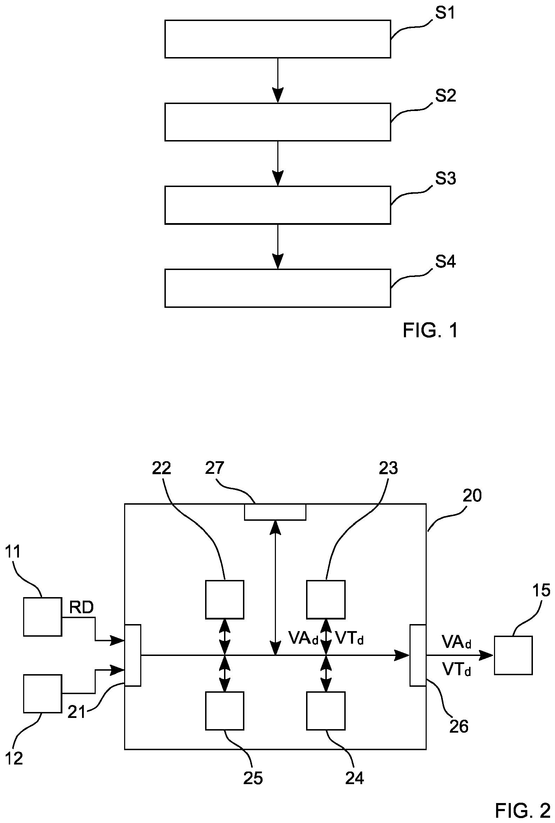

Fig. 1 schematically illustrates a method for evaluating measurement data from a radar sensor of an aerial vehicle. In a first step, measurement data from the radar sensor are retrieved S1. Preferably, non-stationary objects are filtered from the measurement data. A radial velocity of a detected stationary object relative to the radar sensor is determined S2 from the measurement data. Advantageously, the radial velocity is determined for a plurality of detection points. An angular velocity of the radar sensor is then determined S3 from the determined radial velocity, an estimated radial velocity of the detected object relative to the radar sensor, which is estimated from a model, and a distance to the detected object. The determined angular velocity of the radar sensor and a determined translational velocity of the radar sensor may be used S4 by a position estimator for positioning of the aerial vehicle. For example, the position estimator may be a Kalman filter, preferably an extended Kalman filter, or another suitable extended filter. Determining S3 the angular velocity of the radar sensor may comprise determining a lateral velocity of the detected object relative to the radar sensor. It may further comprise determining a lateral velocity of the detected object relative to the radar sensor. Advantageously, the determined angular velocity of the radar sensor and the determined translational velocity of the radar sensor are used in a recursive manner for refining the determined angular velocity of the radar sensor and the determined translational velocity of the radar sensor. An angular velocity of the detected object may be estimated using an estimated initial value of a translational velocity of the radar sensor. For example, the initial value of the translational velocity of the radar sensor may be estimated from data of at least one sensor, e.g., an inertial measurement unit or an image-based odometer.

Fig. 2 schematically illustrates a block diagram of a first embodiment of an apparatus 20 according to the invention for evaluating measurement data RD from a radar sensor 11 of an aerial vehicle. The apparatus 20 has an input 21, via which a data retrieval unit 22 retrieves measurement data RD from the radar sensor 11. Preferably, non-stationary objects are filtered from the measurement data RD. A processing unit 23 is configured to determine a radial velocity of a detected stationary object relative to the radar sensor 11 from the measurement data RD. Advantageously, the radial velocity is determined for a plurality of detection points. The processing unit 23 is configured to determine an angular velocity $VA_d$ of the radar sensor 11 from the determined radial velocity, an estimated radial velocity of the detected object relative to the radar sensor 11, which is estimated from a model, and a distance to the detected object. A local storage unit 25 is provided for storing data during processing. For determining the angular velocity $VA_d$ of the radar sensor 11, the processing unit 23 may determine a lateral velocity of the detected object relative to the radar sensor 11. The processing unit 23 may further determine a lateral velocity of the detected object relative to the radar sensor 11. Advantageously, the determined angular velocity $VA_d$ of the radar sensor 11 and a determined translational velocity $VT_d$ of the radar sensor 11 are used by the processing unit 23 in a recursive manner for refining the determined angular velocity $VA_d$ of the radar sensor 11 and the determined translational velocity $VT_d$ of the radar sensor 11. An angular velocity of the detected object may be estimated using an estimated initial value of a translational velocity of the radar sensor 11. For example, the initial value of the translational velocity of the radar sensor 11 may be estimated from data of at least one sensor 12, e.g., an inertial measurement unit or an image-based odometer. The determined angular velocity $VA_d$ of the radar sensor 11 and the determined translational velocity $VT_d$ of the radar sensor 11 may be provided via an output 25 of the apparatus 20 to a position estimator 15 for positioning of the aerial vehicle. For example, the position estimator 15 may be a Kalman filter, preferably an extended Kalman filter, or another suitable extended filter.

The data retrieval unit 22 and the processing unit 23 may be controlled by a control unit 24. A user interface 27 may be provided for enabling a user to modify settings of the data retrieval unit 22, the processing unit 23, and the control unit 24. The data retrieval unit 22, the processing unit 23, and the control unit 24 can be embodied as dedicated hardware units. Of course, they may likewise be fully or partially combined into a single unit or implemented as software running on a processor, e.g., a CPU or a GPU. The input 21 and the output 26 may be embodied as separate interfaces or as a joint bidirectional interface.

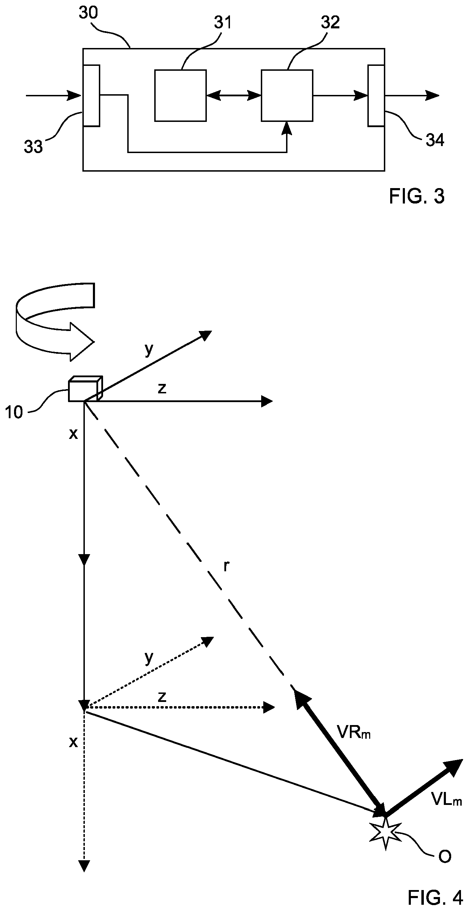

A block diagram of a second embodiment of an apparatus 30 according to the invention for evaluating measurement data from a radar sensor of an aerial vehicle e is illustrated in Fig. 3. The apparatus 30 comprises a processing device 32 and a memory device 31. For example, the apparatus 30 may be a computer or an embedded system. The memory device 31 has stored instructions that, when executed by the processing device 32, cause the apparatus 30 to perform steps according to one of the described methods. The instructions stored in the memory device 31 thus tangibly embody a program of instructions executable by the processing device 32 to perform program steps as described herein according to the present principles. The apparatus 30 has an input 33 for receiving data. Data generated by the processing device 32 are made available via an output 34. In addition, such data may be stored in the memory device 31. The input 33 and the output 34 may be combined into a single bidirectional interface.

The processing device 32 as used herein may include one or more processing units, such as microprocessors, digital signal processors, or a combination thereof.

The local storage unit 25 and the memory device 31 may include volatile and/or non-volatile memory regions and storage devices such as hard disk drives, optical drives, and/or solid-state memories.

Further details of the invention shall now be explained with reference to Figs. 4 to 6. In the following, the described solution evaluates movements of the radar sensor. By assuming a rigid body, the movement of the aerial vehicle can be determined by coordinate transformation.

Fig. 4 shows a simplified model of a fast turn of an aerial vehicle 10. The scenario is an aerial vehicle 10, e.g., an unmanned aerial vehicle 10, which is equipped with a radar sensor and an inertial measurement unit or another suitable sensor. The aerial vehicle 10 is following a given trajectory, e.g., by remote control or autonomously. In a path with a turn with a small curvature radius, like a fast yaw turn, a lateral velocity $VL_m$ of a detected object O is measured by the radar sensor mounted on the aerial vehicle 10, which receives a radar cross section of the object O. In the figure, the coordinate system of the aerial vehicle 10 is represented by solid lines. The dashed lines represent the coordinate system of the aerial vehicle 10 transformed to the x-position of the object O. The aerial vehicle 10 rotates around the z-axis with a negative yaw value. The measured radar cross section of the object O has a radial component of $VR_m$ due to a relative movement of the object O with regard to the aerial vehicle 10 and a lateral component $VL_m$ as result of the yaw turn of the aerial vehicle 10.

When the object O is tracked over time, the angular velocity $VA_d$ of the radar sensor can simply be determined from the measured lateral velocity $VL_m$ of the object O as follows:

$$VL_m = VA_d \cdot D, \qquad\qquad\qquad (1)$$

where D is the distance between the aerial vehicle 10 and the detected object O. However, when the object O is not tracked, a more complex solution is needed.

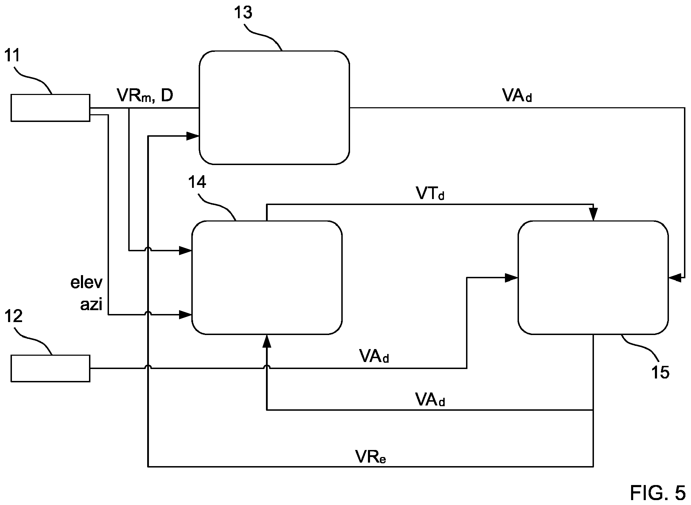

Fig. 5 shows a simplified signal processing pipeline for validating the position of the radar sensor 11 using estimation of the position of untracked detected objects due to rotation and movement of the radar sensor 11. This position estimation is fused with other sensors 12, such as an inertial measurement unit or an image-based odometer, to enhance the estimation. The final position estimation using multi sensor fusion will be fed back recursively to enhance the rotation and speed estimations.

The radar sensor 11 delivers measured values of the radial velocity $VR_m$ of a detected stationary object and the distance D to this object. These values are input to a rotation estimator 13, which calculates the angular velocity $VA_d$ of the radar sensor 11 by evaluating the measurement data in accordance with the below equations (2) and (3). The equations refer for one detection point out of many detection points from the radar cross section.

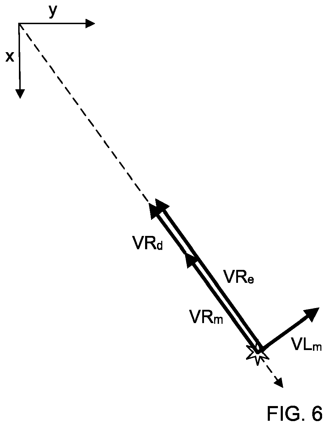

The aerial vehicle and hence the radar sensor 11 is rotating and the radar sensor 11 measures a lateral velocity $VL_m$ that is different from an expected lateral velocity. This difference is the result of the rotation of the radar sensor 11. The estimated radial velocity $VR_e$ of the object is derived from a model and is used to calculate the difference between a detection radial velocity when the radar sensor 11 is not rotating and the measured value of radial velocity $VR_m$ during rotation. An exemplary difference $VR_d$ between an expected radial velocity $VR_e$ and a measured radial velocity $VR_m$ of a detected object is shown in Fig. 6.

In order to estimate the angular velocity $VA_e$ of an object, an initial guess of the translational velocity $VT_d$ is needed. With that guess, the below measurement equation (4) is solved, which gives the expected radial velocity $VR_e$, and compared with the measured radial velocity $VR_m$:

$$VR_d = VR_e - VR_m. \qquad (2)$$

The difference $VR_d$ between both values gives an indication of the lateral velocity $VL_m$. From the lateral velocity $VL_m$, the angular velocity $VA_d$ can be derived using equation (1), since there is a proportional dependency between the two via the distance D:

$$\frac{VL_m}{VL_e} = \frac{VR_m}{VR_e}, \qquad (3)$$

where $VL_e$ is the expected lateral velocity derived from the model.

The speed estimator 14 estimates the translational velocity $VT_d = [v_x v_y v_z]^T$ of the radar sensor 11 by taking the radial velocity radial velocity $VR_{m,i}$ of each detection point i and the angular velocity $VA_d$ of the radar sensor 11, estimated by a position estimator 15, as input and by solving the following equation:

$$VR_{m,i} = VT_d \cdot [\cos(azi_i) \cdot \cos(elev_i), \sin(azi_i) \cdot \cos(elev_i), \sin(elev_i)], \qquad (4)$$

where $azi_i$ and $elev_i$ are the azimuth and the elevation of detection point i, respectively. The processes performed by the rotation estimator 13 and the speed estimator 14 are repeated iteratively until an optimal solution for equations (1) and (4) is found.

The position estimator 15 calculates the position of the radar sensor 11 according to the angular velocity $VA_d$ of the radar sensor 11 measured by the sensor 12 and a calculated translational velocity $VT_d$ of the radar sensor 11 provided by the speed estimator 14. In particular, the position estimator 15 calculates a filtered angular velocity $VA_d$ of the radar sensor 11 from the angular velocity $VA_d$ of the radar sensor 11 provided by the rotation estimator 13 and the angular velocity $VA_d$ of the radar sensor 11 measured by the sensor 12. To this end, the position estimator 15 may use a Kalman filter, preferably an extended Kalman filter, or another suitable extended filter. The output of the position estimator 15 is used as input for finding a solution for the translational velocity $VT_d$ of the radar sensor 11 and the angular velocity $VA_d$ of the radar sensor 11.

The angular velocity $VA_d$ of the radar sensor 11 and translational velocity $VT_d$ of the radar sensor 11 are used to enhance positioning of the aerial vehicle in curved trajectories.

**Reference numerals**

| | |
|---|---|
| 10 | Aerial vehicle |
| 11 | Radar sensor |
| 12 | Sensor |
| 13 | Rotation estimator |
| 14 | Speed estimator |
| 15 | Position estimator |

| | |
|---|---|
| 20 | Apparatus |
| 21 | Input |
| 22 | Data retrieval unit |
| 23 | Processing unit |
| 24 | Control unit |
| 25 | Local storage unit |
| 26 | Output |
| 27 | User interface |

| | |
|---|---|
| 30 | Apparatus |
| 31 | Memory device |
| 32 | Processing device |
| 33 | Input |
| 34 | Output |

D        Distance to a detected stationary object
O        Stationary object
RD       Measurement data
$VA_d$   Determined angular velocity of the radar sensor
$VA_e$   Estimated angular velocity of a detected stationary object
$VL_m$   Determined lateral velocity of a detected stationary object
$VR_d$   Difference between estimated radial velocity and determined radial velocity of a detected stationary object
$VR_e$   Estimated radial velocity of a detected stationary object
$VR_m$   Determined radial velocity of a detected stationary object
$VT_d$   Determined translational velocity of the radar sensor

S1       Retrieve measurement data
S2       Determine radial velocity of a detected stationary object
S3       Determine angular velocity of the radar sensor
S4       Use determined angular velocity of the radar sensor and determined translational velocity of the radar sensor for positioning

**Claims**

1. A method for evaluating measurement data (RD) from a radar sensor (11) of an aerial vehicle (10), comprising:

   - retrieving (S1) measurement data (RD) from the radar sensor (11);
   - determining (S2) a radial velocity ($VR_m$) of a detected stationary object (O) relative to the radar sensor (11) from the measurement data (RD);
   - determining (S3) an angular velocity ($VA_d$) of the radar sensor (11) from the determined radial velocity ($VR_m$), an estimated radial velocity ($VR_e$) of the detected object (O) relative to the radar sensor (11), which is estimated from a model, and a distance (D) to the detected object (O).

2. The method according to claim 1, wherein determining (S3) the angular velocity ($VA_d$) of the radar sensor (11) comprises determining a lateral velocity ($VL_m$) of the detected object (O) relative to the radar sensor (11).

3. The method according to claim 2, wherein determining (S3) the angular velocity ($VA_d$) of the radar sensor (11) further comprises calculating a difference ($VR_d$) between the estimated radial velocity ($VR_e$) of the detected object (O) and the determined radial velocity ($VR_m$) of the detected object (O).

4. The method according to claim 1 or 2, wherein an angular velocity ($VA_e$) of the detected object (O) is estimated using an estimated initial value of a translational velocity of the radar sensor (11).

5. The method according to claim 4, wherein the initial value of the translational velocity of the radar sensor (11) is estimated from data of at least one sensor (12).

6. The method according to claim 5, wherein the at least sensor (12) is an inertial measurement unit or an image-based odometer.

7. The method according to one of the preceding claims, further comprising determining a translational velocity ($VT_d$) of the radar sensor (11) from an estimated angular velocity ($VA_e$) of the radar sensor (11) and the determined radial velocity ($VR_m$) of the detected object (O).

8. The method according to claim 7, wherein the determined angular velocity ($VA_d$) of the radar sensor (11) and the determined translational velocity ($VT_d$) of the radar sensor (11) are used (S4) by a position estimator (15) to enhance positioning of the aerial vehicle (10).

9. The method according to claim 8, wherein the position estimator (15) is a Kalman filter.

10. The method according to claim 8 or 9, wherein the determined angular velocity ($VA_d$) of the radar sensor (11) and the determined translational velocity ($VT_d$) of the radar sensor (11) are used in a recursive manner for refining the determined angular velocity ($VA_d$) of the radar sensor (11) and the determined translational velocity ($VT_d$) of the radar sensor (11).

11. The method according to one of the preceding claims, wherein the radial velocity ($VR_m$) is determined (S2) for a plurality of detection points.

12. The method according to one of the preceding claims, further comprising filtering non-stationary objects from the measurement data (RD).

13. A computer program code comprising instructions, which, when executed by at least one processor, cause the at least one processor to perform a method according to any of claims 1 to 12 for evaluating measurement data (RD) from a radar sensor (11) of an aerial vehicle (10).

14. An apparatus (20) for evaluating measurement data (RD) from a radar sensor (11) of an aerial vehicle (10), comprising:

    - a data retrieval unit (22) configured to retrieve (S1) measurement data (RD) from the radar sensor (11); and
    - a processing unit (23) configured to determine (S2) a radial velocity ($VR_m$) of a detected stationary object (O) relative to the radar sensor (11) from the measurement data (RD), and to determine (S3) an angular velocity ($VA_d$) of the radar sensor (11) from the determined radial velocity ($VR_m$), an estimated radial velocity ($VR_e$) of the detected object (O) relative to the radar sensor (11), which is estimated from a model, and a distance (D) to the detected object (O).

15. An aerial vehicle (10) comprising an apparatus (20) according to claim 14 for evaluating measurement data (RD) from a radar sensor (11) of the aerial vehicle (10).

FIG. 1

FIG. 2

FIG. 3

FIG. 4

FIG. 5

FIG. 6

Europäisches
Patentamt
European
Patent Office
Office européen
des brevets

# EUROPEAN SEARCH REPORT

**Application Number**

EP 24 18 6564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/369222 A1 (OH JINHYOUNG [US] ET AL) 5 December 2019 (2019-12-05) <br> * figures 1,2 * <br> * paragraph [0001] - paragraph [0015] * <br> * paragraph [0019] - paragraph [0027] * <br> * paragraph [0028] - paragraph [0038] * <br> * paragraph [0046] - paragraph [0052] * <br> * paragraph [0067] - paragraph [0074] * <br> ----- | 1-15 | INV. <br> G01S13/60 <br> G01S13/933 |
| A | US 2020/124716 A1 (MILLAR JEFFREY [US] ET AL) 23 April 2020 (2020-04-23) <br> * paragraph [0008] - paragraph [0010] * <br> * paragraph [0041] - paragraph [0047] * <br> ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 19 November 2024 | Heiß, Michael |

EPO FORM 1503 03.82 (P04C01)

## ANNEX TO THE EUROPEAN SEARCH REPORT
## ON EUROPEAN PATENT APPLICATION NO.

EP 24 18 6564

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | Publication date | Patent family member(s) | Publication date |
|---|---|---|---|
| US 2019369222 A1 | 05-12-2019 | CN 110554376 A<br>DE 102019114511 A1<br>US 2019369222 A1 | 10-12-2019<br>05-12-2019<br>05-12-2019 |
| US 2020124716 A1 | 23-04-2020 | NONE | |

EPO FORM P0459

For more details about this annex : see Official Journal of the European Patent Office, No. 12/82